# EUROPEAN PATENT SPECIFICATION

(11) **EP 4 244 109 B1**
(45) Date of publication and mention of the grant of the patent: **04.09.2024**
(21) Application number: 21815404.5
(22) Date of filing: 12.11.2021
(51) Int. Cl.: B60W 50/02, B60W 50/029, B60K 6/48, B60W 50/14

(54) **DRIVER ASSISTANCE WITH INOPERATIVE SENSORS**
FAHRERASSISTENZ MIT INAKTIVEN SENSOREN
AIDE À LA CONDUITE AU MOYEN DE CAPTEURS INOPÉRANTS

(30) Priority: 13.11.2020 GB 202017915
(43) Date of publication of application: 20.09.2023
(73) Proprietor: Jaguar Land Rover Limited, Coventry, Warwickshire CV3 4LF (GB)
(72) Inventor: PATEL, Jitesh, Coventry Warwickshire CV3 4lf (GB); THANTHRY, Sreedhar, Coventry Warwickshire CV3 4lf (GB)
(74) Representative: Jaguar Land Rover Patents Department
(86) International application number: PCT/EP2021/081588
(87) International publication number: WO 2022/101446

(56) References cited:
- WO-A1-2019/181265
- DE-A1- 102017 204 603
- US-A1- 2020 406 890

## Description

### TECHNICAL FIELD

The present invention relates to driver assistance with inoperative sensors. In particular, but not exclusively it relates to parking assistance when one or more sensors are inoperative while another one or more sensors is operative.

### BACKGROUND

Automated driving systems (ADS), also referred to as Advanced driver-assistance systems (ADAS), are electronic systems that assist drivers in driving and parking functions and/or automate parts of driving tasks. ADAS systems use automated technology, such as sensors, to detect nearby obstacles or to detect hazards. ADAS systems are able to perform one or more of: longitudinal vehicle control (automated acceleration and/or automated braking); lateral vehicle control (automated steering); and process driver inputs and alert the driver to a hazard or opportunity via a humanmachine interface (HMI).

Examples of ADAS include: autonomous emergency braking; driver condition monitoring; traffic sign recognition; adaptive cruise control; blind spot assist; reverse crossing traffic detection; and parking assistance, among others.

An ADAS function may be disabled completely if one sensor of a plurality of sensors is inoperative, even if the other operative sensors may provide situational awareness regarding the majority of the environment surrounding the vehicle. A sensor may become inoperative if it is blocked by dirt or insects, or if a detectable fault occurs.

For further information relating to a vehicle control system for a vehicle with a plurality of environment sensors which have different or overlapping detection areas, the reader is directed to German patent application number DE-A1-10-2017-204603. For further information relating a parking assistance system with which it is possible to continue automatic parking even when an external recognition device fails, the reader is directed to United States patent publication number US-A1-2020/406890.

### SUMMARY OF THE INVENTION

It is an aim of the present invention to address one or more of the disadvantages associated with the prior art.

According to an aspect of the invention there is provided a control system for a vehicle, the control system comprising one or more controllers, wherein the control system is configured to: enable a driver assistance system in dependence on information from a plurality of sensors; determine that one or more of the plurality of sensors is inoperative while another one or more of the plurality of sensors is operative; and restrict functionality of the enabled driver assistance system in dependence on the inoperative one or more sensors, wherein the driver assistance system is configured to provide one or more parking assistance functions, the one or more parking assistance functions comprising automated parking and parking space detection, and wherein restricting the functionality comprises restricting automated parking without restricting parking space detection, in dependence on the inoperative one or more of the sensors, such that, when automated parking is not available, the parking space detection function is operable to render an alert via a human machine interface (HMI) when a detected parking space meets parking suitability conditions and to alert a driver that parking in said detected space has to be performed manually. An advantage is that the driver assistance system is more frequently usable, due to a staged degradation process.

In some examples, restricting the functionality comprises restricting automated manoeuvring to a subset of one or more directions in dependence on the inoperative one or more of the sensors.

In some examples, restricting the functionality comprises transmitting a prompt for output to a driver, prompting the driver to control manoeuvring when manoeuvring in another direction is required, not from the subset of one or more directions.

In some examples, the control system is configured to restrict functionality of the driver assistance system in dependence on at least one of: in which longitudinal direction a sensing axis of the inoperative one or more of the sensors extends; in which lateral direction a sensing axis of the inoperative one or more of the sensors is positionally and/or angularly offset; and a sensor modality of the inoperative one or more of the sensors.

In some examples, the plurality of sensors comprise sensors providing a first sensor modality and optionally sensors providing a second sensor modality, and wherein the vehicle is configured to be manoeuvred in a first longitudinal direction and in a second longitudinal direction and is configured to be steered in a first lateral direction and in a second lateral direction.

In some examples, the first sensor modality is an ultrasonic sensor modality, and wherein the second sensor modality is a vision sensor modality.

In some examples, when the inoperative one or more of the sensors includes at least one sensor providing the first sensor modality with a sensor axis extending in the first longitudinal direction, restricting the functionality comprises at least partially inhibiting automated manoeuvring in the first longitudinal direction without inhibiting automated manoeuvring in the second longitudinal direction.

In some examples, if the sensor axis is angularly and/or positionally offset in the first lateral direction, at least partially inhibiting automated manoeuvring in the first longitudinal direction comprises inhibiting automated manoeuvring in the first longitudinal direction with steering in the first lateral direction without inhibiting automated manoeuvring in the first longitudinal direction with steering in the second lateral direction.

In some examples, when the one or more inoperative sensors includes at least one sensor providing the second sensor modality but does not include at least one sensor providing the first sensor modality, automated manoeuvring in the first longitudinal direction is not inhibited.

In some examples, when the inoperative one or more of the sensors includes a subset of at least one sensor providing the first sensor modality and having a sensor axis extending in the first longitudinal direction, restricting the functionality comprises at least partially inhibiting automated manoeuvring of the vehicle in the first longitudinal direction without inhibiting detection of parking spaces offset from the vehicle in the first longitudinal direction.

In some examples, if the sensor axis is angularly and/or positionally offset in the first lateral direction, restricting the functionality comprises inhibiting automated manoeuvring of the vehicle in the first longitudinal direction with steering in the first lateral direction without inhibiting automated manoeuvring in the first longitudinal direction with steering in the second lateral direction and without inhibiting detection of parking spaces offset from the vehicle in the first longitudinal direction.

In some examples, the driver assistance system is configured to fuse the information from the plurality of sensors, comprising fusing information from different sensor modalities.

According to an aspect of the invention there is provided a vehicle comprising the control system as previously described.

According to an aspect of the invention there is provided a method of controlling a driver assistance system, the driver assistance system being configured to provide one or more parking assistance functions, the one or more parking assistance functions comprising automated parking and parking space detection, the method comprising: enabling the driver assistance system in dependence on information from a plurality of sensors; determining that one or more of the plurality of sensors is inoperative while another one or more of the plurality of sensors is operative; restricting functionality of the enabled driver assistance system in dependence on the inoperative one or more sensors, wherein restricting the functionality comprises restricting automated parking without restricting parking space detection, in dependence on the inoperative one or more of the sensors; and, when automated parking is not available, rendering an alert via a human machine interface (HMI) when a detected parking space meets parking suitability conditions and alerting a driver that parking in said detected space has to be performed manually.

According to an aspect of the invention there is provided computer software that, when executed, is arranged to perform the method. According to a further aspect of the invention there is provided a non-transitory computer readable medium comprising computer readable instructions that, when executed by a processor, cause performance of any one or more of the methods described herein.

The one or more controllers may collectively comprise: at least one electronic processor having an electrical input for receiving information; and at least one electronic memory device electrically coupled to the at least one electronic processor and having instructions stored therein; and wherein the at least one electronic processor is configured to access the at least one memory device and execute the instructions thereon so as to cause the control system to cause performance of the method.

### BRIEF DESCRIPTION OF THE DRAWINGS

One or more embodiments of the invention will now be described, by way of example only, with reference to the accompanying drawings, in which:
FIG. 1 illustrates an example of a vehicle with a plurality of sensors;
FIGS. 2A, 2B, 2C illustrates an example of sensing regions and fields of view of the sensors of the vehicle;
FIGS. 3A, 3B illustrate an example of a system and a non-transitory computer-readable storage medium;
FIG. 4 illustrates an example of a method;
FIG. 5 illustrates an example of a state machine;
FIG. 6 illustrates an example degradation strategy table for an automated parking function;
FIG. 7 illustrates an example degradation strategy table for a parking space detection function; and
FIG. 8 illustrates an example method.

### DETAILED DESCRIPTION

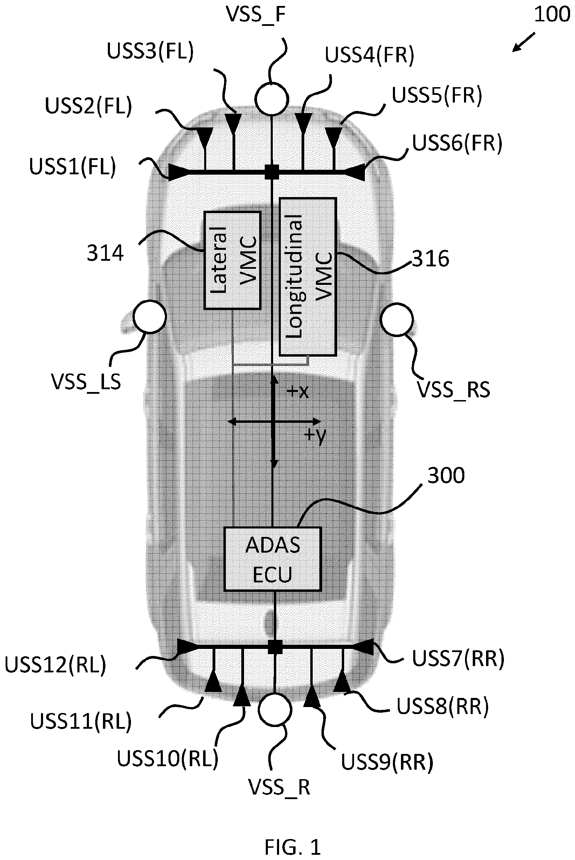

FIG. 1 illustrates an example of a vehicle 100 in which embodiments of the invention can be implemented. In some, but not necessarily all examples, the vehicle 100 is a passenger vehicle, also referred to as a passenger car or as an automobile. In other examples, embodiments of the invention can be implemented for other applications, such as commercial vehicles.

FIG. 1 is a top-down view and illustrates a longitudinal x-axis between the front and rear of the vehicle 100, and an orthogonal lateral y-axis between left and right lateral sides of the vehicle 100. Rotation about the y-axis is pitch and rotation about the x-axis is roll. A forward direction typically faced by a driver's seat is in the positive x-direction; rearward is -x. These are a first longitudinal direction and a second longitudinal direction. A rightward direction as seen from the driver's seat is in the positive y-direction; leftward is -y. These are a first lateral direction and a second lateral direction.

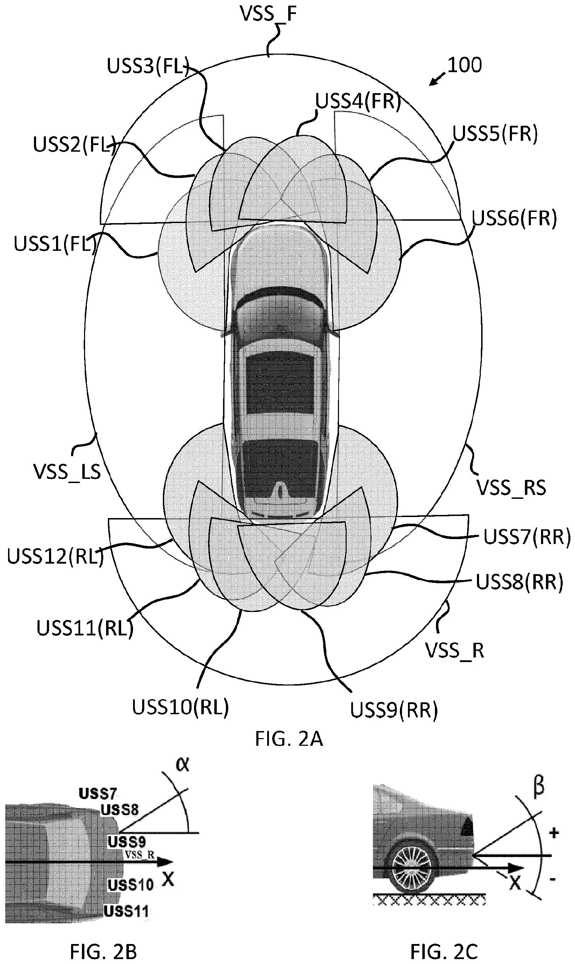

The vehicle 100 of FIG. 1 is equipped with a driver assistance system (e.g. ADAS). The ADAS operates in dependence on information from a plurality of sensors. An example sensor layout is shown in FIGS. 1 and 2A-2C. It would be appreciated that the sensors and/or layout could be different from those shown.

FIG. 1 illustrates the sensor layout. FIG. 2A illustrates the corresponding sensing region of each sensor on a horizontal plane, the shape schematically indicating a functional range of the sensor. The illustrated shape is approximately semicircular but could be tunable depending on the sensor specification and mounting position. FIGS. 2B and 2C show a sensor axis (centre of field of view) offset from the x-axis by a horizontal angle α and by a vertical angle β.

The following definitions are used regarding angles:
α=0° is regarded as extending in the +x-axis and α=180° is regarded as extending in the -x-axis;
α=90° is regarded as extending in the +y-axis (rightwards) and α=270° is regarded as extending in the -y-axis (leftwards);
β is outside the scope of the claimed invention but is assumed to be close to zero for the purposes of simplicity.

In FIG. 1 the sensors comprise first sensors (e.g. USS1, USS2...) providing a first sensor modality and second sensors (e.g. VSS_F, VSS_R...) providing a second sensor modality. In other examples the sensors provide only one sensor modality or provide more than two sensor modalities.

In FIG. 1 the first sensor modality is an ultrasonic sensor modality and the second sensor modality is a vision sensor modality. In other examples at least one of the sensor modalities is different.

An ultrasonic sensor modality is enabled by a plurality of ultrasonic sensors at different locations on the vehicle body, wherein the ultrasonic sensors are configured to act at least as parking sensors. Therefore in at least some examples a plurality of ultrasonic sensors is provided at least on a rear bumper of the vehicle 100. Optionally, and as shown, a plurality of ultrasonic sensors is also provided on a front bumper of the vehicle 100.

In FIG. 1 the ultrasonic sensors comprise sets of a plurality (e.g. three) ultrasonic sensors for each vehicle corner (quarter). The sensors may approximately follow bumper curvature, meaning that α generally diverges from the x-axis with a greater y-axis positional offset from the centre x-axis. In an example the ultrasonic sensors comprise at least some of:
- front left (FL) ultrasonic sensors USS1, USS2, USS3, wherein 240°<α(USS1)<300°, wherein α(USS1)<α(USS2)<α(USS3), and wherein 330°<α(USS3)<0°. The front-left USS therefore detect objects in a region to the front left of the vehicle 100.
- front right (FR) ultrasonic sensors USS4, USS5, USS6, wherein 0<α(USS4)<30°, wherein α(USS4)<α(USS5)<α(USS6), and wherein 60°<α(USS6)<120°. The front-right USS are therefore configured to (mainly) detect objects in a region to the front right of the vehicle 100.
- rear right (RR) ultrasonic sensors USS7, USS8, USS9, wherein 60°<α(USS7)<120°, wherein α(USS7)<α(USS8)<α(USS9), and wherein 150°<α(USS9)<180°. The rear-right USS are therefore configured to (mainly) detect objects in a region to the rear right of the vehicle 100.
- rear left (RL) ultrasonic sensors USS10, USS11, USS12, wherein 180°<α(USS10)<210°, wherein α(USS10)<α(USS11)<α(USS12), and wherein 240°<α(USS12)<300°. The rear-left USS are therefore configured to (mainly) detect objects in a region to the rear left of the vehicle 100.

In some examples, a vision sensor modality is configured to detect electromagnetic radiation. Examples include visual light spectrum cameras, light detection and ranging (LIDAR), radio detection and ranging (RADAR), or near-infrared.

In FIG. 1, but not necessarily all examples the vision sensor modality is enabled by visual light spectrum cameras (`vision sensors' herein) configured to provide data to image processors implementing computer vision algorithms.

A vision sensor modality is enabled by a plurality of vision sensors each having a horizontal field of view less than 360° and located at different positions on the vehicle body facing in different directions. Alternatively, a single 360° vision sensor may be provided. In an example the vision sensors comprise at least some of:
- a front vision sensor VSS_F facing α≈0° or 330°<α(VSS_F)<30°.
- a right side vision sensor VSS_RS facing α≈90° or 60°<α(VSS_RS)<120°.
- a rear vision sensor VSS_R facing α≈180° or 150°<α(VSS_R)<210°.
- a left side vision sensor VSS_LS facing α≈270° or wherein 240°<α(VSS_LS)<300°.

The vison sensors may have longer sensing ranges than the ultrasonic sensors as shown in FIG. 2 by their larger sensing regions extending further away from the vehicle 100 than the sensing regions of the ultrasonic sensors.

In some, but not necessarily all examples the ADAS utilises a sensor fusion algorithm to combine information from each of the sensor modalities (e.g. VSS+USS) in order to improve obstacle, feature and/or pedestrian detection and classification, to enhance system performance, and/or to build redundancy. The sensor fusion algorithm may utilise vision sensors for finding road markings, road signs, parking spaces, and obstacles (e.g. pedestrians, vehicles and roadside furniture). Ultrasonic data may be overlaid onto the vision data as a lower layer, to improve confidence. Ultrasonic sensors can detect 3D obstacles that reflect ultrasonic radiation.

In at least some examples the ADAS is configured to use information from first sensors to control automated manoeuvring of the vehicle 100 in a first longitudinal direction (e.g. +x) and/or to control detection of objects (e.g. parking spaces and/or obstacles) offset from the vehicle 100 in the first longitudinal direction. The first sensors have sensor axes extending at least partially in the first longitudinal direction. In an example the first sensors comprise at least some of USS1, USS2, USS3, USS4, USS5, USS6, VSS_F, VSS_LS, VSS_RS.

In at least some examples the ADAS is configured to use information from second sensors to control automated manoeuvring of the vehicle 100 in a second longitudinal direction (e.g. -x) and/or to control detection of objects (e.g. parking spaces and/or obstacles) offset from the vehicle 100 in the second longitudinal direction. The second sensors have sensor axes extending at least partially in the first longitudinal direction. In an example the second sensors comprise at least some of USS7, USS8, USS9, USS10, USS11, USS12, VSS_R, VSS_LS, VSS_RS.

In at least some examples the ADAS is configured to use information from subsets of the first and/or second sensors to control automated steering of the vehicle 100 in first and/or second lateral directions during a longitudinal manoeuvre, and/or is configured to use the information to control detection of objects (e.g. parking spaces and/or obstacles) offset from the vehicle 100 in the first and/or second lateral directions. The subsets of sensors may depend on whether the vehicle 100 is moving forward (+x) or in reverse (-x). At least some of the following sensors are used for the following manoeuvres/parking space detection searching directions:
- Forward left = front left corner ultrasonic sensors (USS1, USS2, USS3), forward-facing vision sensor (VSS_F), left-facing vision sensor (VSS_LS).
- Forward right = front right corner ultrasonic sensors (USS4, USS5, USS6), forward-facing vision sensor (VSS_F), right-facing vision sensor (VSS_RS).
- Rear right = rear right corner ultrasonic sensors (USS7, USS8, USS9), rear-facing vision sensor (VSS_R), right-facing vision sensor (VSS_RS).
- Rear left = rear left corner ultrasonic sensors (USS10, USS11, USS12), rear-facing vision sensor (VSS_R), left-facing vision sensor (VSS_LS).

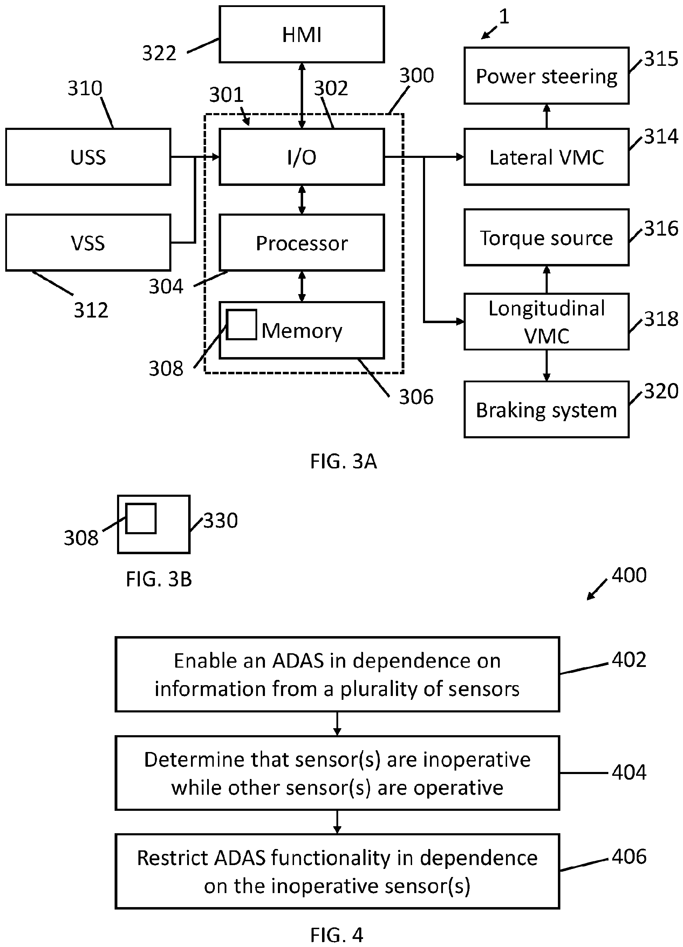

FIG. 1 illustrates a control system 300 operably coupled to a lateral vehicle motion controller (VMC) 314 and a longitudinal VMC 316. The lateral VMC 314 controls an electronic power steering actuator. The longitudinal VMC 316 controls a torque source and a braking system.. In some implementations the lateral and longitudinal VMCs are functions of a single VMC. In more detail, FIG. 3 illustrates a system 1 comprising the control system 300 and one or more other optional components.

The control system 300 comprises at least one controller 301. The controller 301 of FIG. 3 includes at least one processor 304; and at least one memory device 306 electrically coupled to the electronic processor 304 and having instructions 308 (e.g. a computer program) stored therein, the at least one memory device 306 and the instructions 308 configured to, with the at least one processor 304, cause any one or more of the methods described herein to be performed. The processor 304 may have an interface 302 such as an electrical input/output I/O or electrical input for receiving information and interacting with external components.

The control system 300 of FIG. 3 is configured to receive information from ultrasonic sensors (USS) 310 and from vision sensors (VSS) 312. If the control system 300 can perform automated longitudinal control (acceleration and/or braking), the control system 300 may be operably coupled to a torque source 316 and/or a braking system 320, optionally via a longitudinal VMC 318. The torque source 316 may comprise an internal combustion engine and/or an electric machine, for example. The braking system 320 may comprise a friction braking system and/or a regenerative braking system, for example. If the control system 300 can perform automated lateral control (steering), the control system 300 can be operably coupled to an electronic power steering actuator (EPS) 315, optionally via a lateral VMC 314

The control system 300 of FIG. 3 may be configured to transmit information to an HMI 322 comprising an output device, for rendering information to a user. The control system 300 may be configured to receive user inputs from the same or a different HMI 322 comprising an input device. The HMI 322 may comprise an input/output device such as a touchscreen display, for example. The HMI 322 available to the control system 300 may comprise multiple devices such as audio rendering devices and display devices.

FIG. 3B illustrates a non-transitory computer-readable storage medium 330 comprising the instructions 308 (computer software).

In at least some examples the ADAS is configured to provide one or more parking assistance functions. Parking assistance functions may be categorised as automated parking or parking space detection.

An example automated parking function is perpendicular parking. Perpendicular parking means parking cars side-by-side. The perpendicular parking function may either drive forwards (nose first) or reverse (rear first) into a detected perpendicular parking space. In tight spaces the perpendicular parking function may shuffle the vehicle 100 forwards and/or backwards one or more times to complete a multi-point turn to orient the vehicle 100 into the perpendicular parking space. In one embodiment the perpendicular parking function also performs automated steering (full automatic park feature). In another embodiment steering remains the responsibility of the driver.

Another example automated parking function is parallel parking. Parallel parking means parking cars end-to-end. The parallel parking function may reverse (rear first) into a detected parallel parking space. In tight spaces the parallel parking function may shuffle the vehicle 100 forwards while steering towards the space, after having reversed in. This brings the nose of the vehicle 100 into the space to finalise the parallel orientation. For very tight spaces additional forwards/reverse shuffling is required. Steering may either be automated or manual as described above.

Another example automated parking function is remote parking assistance. Remote parking assistance enables the driver to exit the vehicle 100 prior to commencement of the manoeuvre, which is convenient for parking in narrow garages or bays with limited space for opening a door. The ADAS is in communication with a portable electronic device of the driver (e.g. mobile phone, smart watch, virtual reality glasses, etc.). The driver uses a HMI 322 on their device to send parking instructions such as forward exploration, rearward exploration, forward nudging and/or rearward nudging.

Nudging comprises the driver using the remote HMI 322 (e.g. slide and hold interaction) to manually trigger the control system 300 to cause one incremental longitudinal movement in response, during which the control system 300 also controls steering automatically based on the sensors. The control system 300 may also use the sensors to prevent collision with sensed obstacles if following the driver trigger would cause a collision. The incremental longitudinal movement could be in the order of 1-10 centimetres, or at most less than 40 centimetres.

An exploration is a parking manoeuvre, in which the system 1 has not scanned/determined the parking space well in advance so the environment is unfamiliar. In this case the system 1 will sense the environment on the fly (while vehicle in motion). Example use cases include parking the vehicle inside a garage or driving out from the garage

An example parking space detection function is line-to-line parking space detection. Lines comprise painted lines. A detected pair of approximately parallel lines may be recognised as a line-to-line parking space. Line-to-line parking space detection may utilise a vision sensor.

Another example parking space detection function is obstacle-to-obstacle parking space detection. The term 'vehicleto-vehicle' is used synonymously but a space could be bounded by objects other than vehicles, such as walls. A detected gap between parked vehicles/objects may be recognised as an obstacle-to-obstacle parking space. Either a vision sensor or an ultrasonic sensor (or both) are suitable.

If the ADAS is configured for parking space detection followed by automated parking, the parking manoeuvre into a detected space may be performed automatically.

If an automated parking function is not available, the parking space detection function may instead render an alert via an HMI 322 when a space meets parking suitability conditions (space size etc). The driver is alerted to perform the manoeuvre themselves. Optionally the parking space detection function may audibly/visually guide the driver regarding suggested steering/longitudinal inputs.

Based on the preceding paragraphs it will be understood that successful automated parking may comprise multiple stages comprising multiple ones of the following manoeuvres: forward left; forward right; rearward left; rearward right. Therefore, different sensors are 'critical' at different times during the parking manoeuvre.

According to various aspects of the invention if a sensor becomes inoperative (e.g. blocked or faulty) while one or more other sensors remains operative, the ADAS can in some instances remain enabled in a degraded (restricted) state depending on the inoperative one or more sensors. Further, if more sensors become inoperative the degradation may be staged with some features remaining available. This non binary degradation strategy is convenient for the driver especially if parts of their vehicle 100 are muddy.

Therefore, according to various aspects there is provided a method as shown in FIG. 4, the method comprising: at operation 402, enabling a driver assistance system (e.g. parking assist function) in dependence on information from a plurality of sensors; at operation 404, determining that one or more of the plurality of sensors is inoperative while another one or more of the plurality of sensors is operative; and at operation 406, restricting functionality of the enabled driver assistance system in dependence on the inoperative one or more sensors. In some examples, operation 406 comprises restricting automated manoeuvring to a subset of one or more directions in dependence on the inoperative one or more of the sensors. In some examples, operation 406 comprises restricting detection of parking spaces to a subset of one or more directions in dependence on the inoperative one or more of the sensors.

Various examples of degradation (restriction) strategies are described below in relation to the Figures.

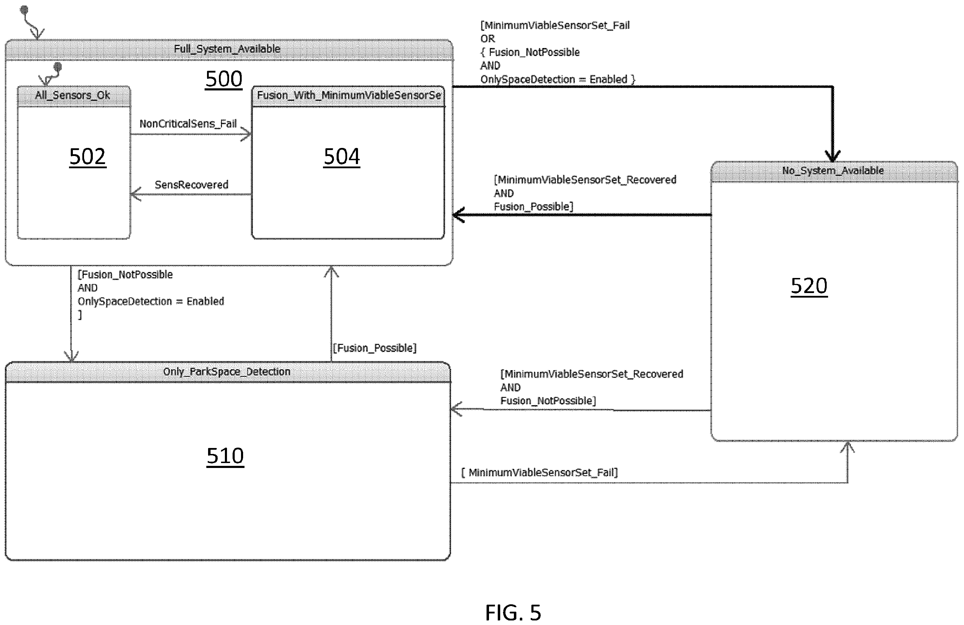

Firstly FIG. 5 provides an example state machine for controlling ADAS degradation. The control system 300 may monitor the state continuously while the ADAS is enabled. The ADAS may be always-on or selectable via an HMI 322.

In a full system superstate 500 ('Full_System_Available') enough sensors are operative that all parking assistance functions remain enabled in full or degraded (restricted) form. The parking assistance functions may include at least some of: a perpendicular parking function; a parallel parking function; a remote parking assistance function; a parking space detection function.

When a parking assistance function is enabled, a driver is able to trigger the parking assistance function via an HMI 322.

In a fully operational substate 502 ('All_Sensors_Ok') of the full system superstate 500 all sensors are operative. All parking assistance functions are enabled including automated parking functions and parking space detection.

In a partially degraded (restricted) substate 504 ('Fusion_Sensor_Pairs_Ok') of the full system superstate 500 one or more non-critical sensors are inoperative while other critical sensors remain operative.

A critical sensor may be a sensor whose failure cannot be tolerated in dependence on its known sensing region and sensor axis direction, and the associated implication on blind spots. A critical sensor may be a sensor whose failure means that the state machine cannot remain in the full system superstate 500.

In the partially degraded substate, at least some of the above parking assistance functions may be restricted in some way while remaining enabled and selectable by the driver.

In the partially degraded substate 504, operations (e.g. automated manoeuvring, parking space detection) in the direction of the failed non-critical sensor may be restricted without restricting operations in other directions. For example, a manoeuvre in one direction could be automatic, but then the control system 300 could transmit a handover prompt to HMI 322 for output to a driver, prompting the driver to at least partially control manoeuvring in the direction of the failed critical sensor (e.g. take over steering, or take over steering and longitudinal control).

A non-critical sensor failure transition condition (`NonCriticalSens_Fail') changes substates from 502 to 504. Monitoring the non-critical sensor failure transition condition may comprise determining whether each of a plurality of automated manoeuvring directions comprises a minimum viable sensor set of operative sensors.

In the following examples, the plurality of directions are decomposed to: forward left; forward right; reverse left; and reverse right. In alternative examples, the plurality of directions are only forward or rear, or only left or right, or are decomposed to more than the four given directions.

Determining whether a sensor is operative may comprise determining whether a diagnostic trouble code (DTC) in relation to that sensor is received or stored in memory, for example.

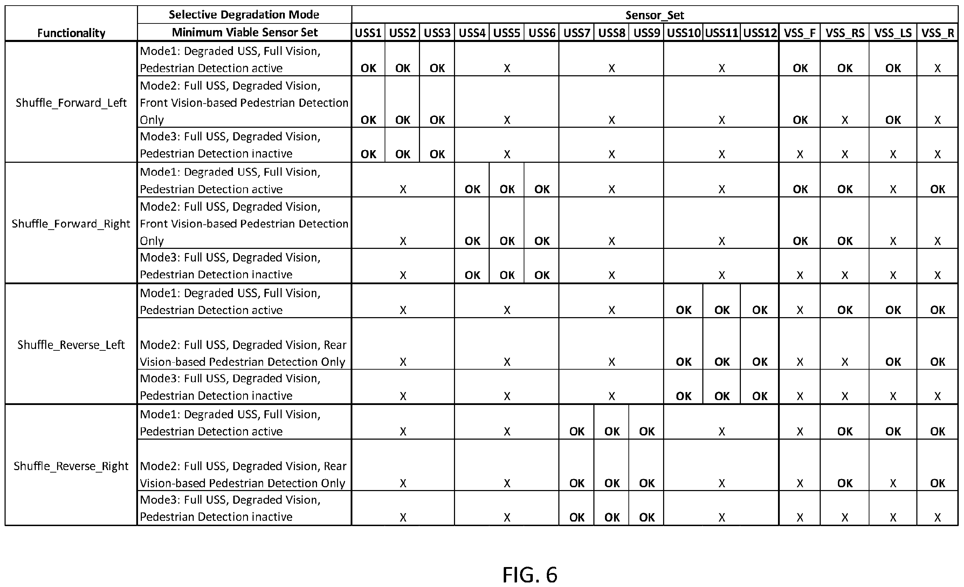

Examples of non-critical sensor failures will be described in relation to FIG. 6. FIG. 6 provides an example of which sensors must be operative ('OK') for automated parking operations in each given direction, and which sensors are irrelevant and allowed to fail for each given direction (designated by 'X' and 'NOK').

As a starting point, if the minimum viable sensor set of each and every direction is satisfied, the state machine is in the fully operational substate 502. FIG. 6 requires that the minimum viable sensor set for each direction is all ultrasonic sensors (e.g. all three). In an alternative embodiment the minimum viable sensor set could be fewer than all ultrasonic sensors.

If for example a reverse ultrasonic sensor (e.g. USS7) fails, a reverse manoeuvre is inhibited but other manoeuvres are not inhibited. Inhibiting means causing driver handover as described above. The inhibited manoeuvre could be lateral direction-specific. For example, loss of USS7 inhibits a reverse right manoeuvre but not a reverse left manoeuvre.

Once the number of operative sensors drops below the minimum viable sensor set for any one of the directions, the non-critical sensor failure transition condition is satisfied and manoeuvring in that direction is inhibited. The continuing loss of ultrasonic sensors remains non-critical until all manoeuvring directions are inhibited, at which point the sensor loss is critical because manoeuvring is no longer possible in any direction. According to this example, the number of available automatic manoeuvring directions degrades progressively as additional sensors become inoperative, until the number of automatic manoeuvring directions drops below a minimum (e.g. drops to zero).

In FIG. 6, but not necessarily all examples the loss of vision sensors does not prohibit manoeuvring in any direction and therefore does not change states in the state machine, as long as enough ultrasonic sensors remain operative. Instead, the loss of vision sensors may cause a transition between different modes of the automated parking function. In FIG. 6, but not necessarily all examples the modes comprise:
- Mode 1: Full functionality because a first set of vision sensors is operative. The first set could depend on the longitudinal direction of the manoeuvre. For example: forward = VSS_F+VSS_LS+VSS_RS; reverse =VSS_R+VSS_LS+VSS_RS.
- Mode 2: Degraded pedestrian/obstacle detection because operative vision sensors fall below a second set of vision sensors, a smaller subset of the first set. The second set could depend on the lateral direction of the manoeuvre. For example: For example: forward left = VSS_F+VSS_LS; forward right = VSS_F+VSS_RS; rear left=VSS_R+VSS_LS; rear right=VSS_R+VSS_RS. As a consequence of entering mode 2, the control system 300 may render an alert via HMI 322, alerting the driver to a blind zone for vision-based pedestrian/object detection. In the illustrated example, manoeuvring in the direction of the inoperative vision sensor is not prohibited if a minimum number of ultrasonic sensors associated with the same direction remain operative. In another example, manoeuvring in the direction(s) associated with the inoperative vision sensor is prohibited without prohibiting manoeuvring in other directions.
- Mode 3: Pedestrian detection inactive because operative vision sensors fall to zero or below a third set. As a consequence of entering mode 3, the control system 300 may render an alert via HMI 322, alerting the driver to the lack of vision-based pedestrian/object detection. In the illustrated example, manoeuvring in the direction of the inoperative vision sensors is not prohibited if a minimum number of ultrasonic sensors associated with the same direction remain operative. In another example, manoeuvring in the directions associated with the inoperative vision sensors is prohibited.

The state machine further comprises a parking space detection-only state 510 (`Only_ParkSpace_Detection') in which automated parking functions are fully inhibited (e.g. not enabled) and therefore not possible to trigger via HMI 322. However, the parking space detection function may remain enabled and therefore possible to trigger via HMI 322.

A parking space detection transition condition ('Fusion_NotPossible AND OnlySpaceDetection=Enabled') changes state from 500 to 510.

The parking space detection transition condition may have two requirements:
1 - critical sensor loss as defined above, so that automated parking functions are not available; and
2 - enough sensors remain operative that parking space detection can remain enabled.

If the first but not the second requirement is satisfied, the state machine instead transitions from state 500 to a no park assist state 520 ('No_System_Available') in which no parking assistance functions are available.

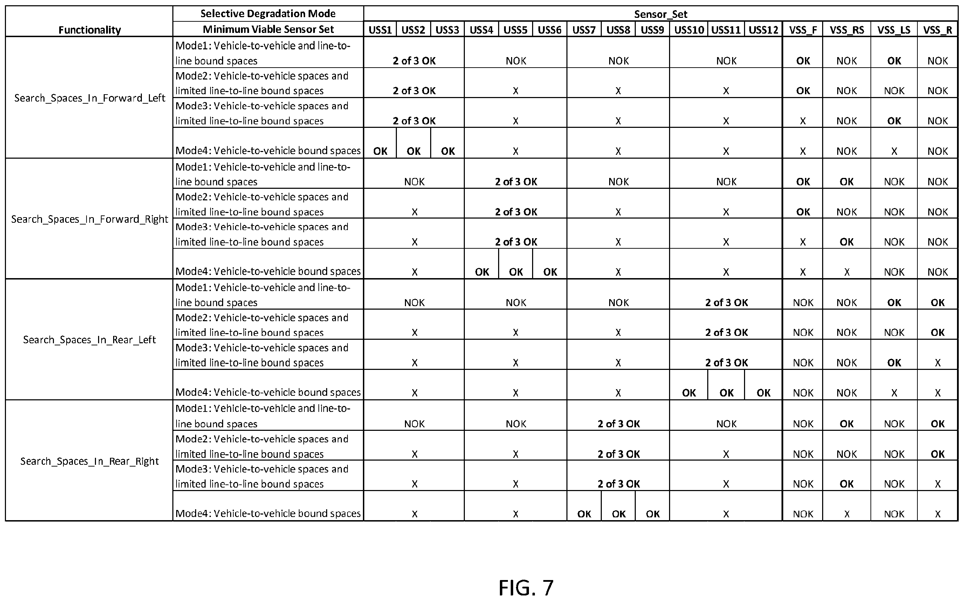

Regarding the second requirement, it would be useful to refer to FIG. 7 which provides a non-limiting example of which sensors should be operative for parking space detection.

FIG. 7 is a table that is similarly laid out to FIG. 6, except relating to parking space detection rather than automated manoeuvring. The minimum viable sensor sets for parking space detection are more tolerant than the minimum viable sensor sets for automated manoeuvring.

In FIG. 7, but not necessarily all examples the minimum viable sensor sets for parking space detection are specific to each of a plurality of different directions, optionally the same directions as those shown in FIG. 6.

In FIG. 7, the minimum viable sensor set for parking space detection in a given direction is:
- a set (e.g. all three) of operative first sensors of a first sensor modality (e.g. ultrasonic sensors) for the given direction, if fewer than a minimum number (e.g. none) of the second sensors of a second sensor modality (e.g. VSS) for the given direction are operative; and/or
- a smaller subset (e.g. two) of the first sensors (e.g. ultrasonic sensors) for the given direction can be accepted, if at least the minimum number (e.g. one) of second sensors (e.g. VSS) for the given direction are operative (sensor fusion possible).

In other words, the minimum viable sensor set for parking space detection of one sensor modality depends on the number of operative sensors of that sensor modality and also depends on the number of operative sensors in the other sensor modality.

In FIG. 7, the number of available parking space detection directions degrade progressively as additional sensors become inoperative, until the number of available parking space detection directions drops below a minimum (e.g. drops to zero).

The control system 300 may transmit information to an HMI 322 for providing to the driver an indication of which parking space detection directions are available and/or unavailable.

Once the number of available automatic manoeuvring directions drops below the minimum (e.g. zero), a no park assist transition condition is satisfied (`AIISensPair_Fail'), causing a transition to the no park assist state 520 in which no parking assistance functions are available.

In FIG. 7, but not necessarily all examples the loss of vision sensors may cause a transition between different modes of the parking space detection function. The modes may progressively degrade line-to-line parking space detection while maintaining obstacle-to-obstacle parking space detection. In FIG. 7, but not necessarily all examples the modes comprise:
- Mode 1: Obstacle-to-obstacle parking space detection and line-to-line parking space detection are both enabled, because a first set of vision sensors is operative. The first set could depend on the longitudinal and/or lateral direction of the parking space detection. For example: forward left = VSS_F+VSS_LS; forward right = VSS_F+VSS_RS; rear left=VSS_R+VSS_LS; rear right=VSS_R+VSS_RS. In Mode 1 a smaller subset of ultrasonic sensors for the given direction can be accepted, such as two out of three ultrasonic sensors. Therefore, this mode of parking space detection can be available even if automated parking is not available, because automated parking requires the full set of ultrasonic sensors to be operative.
- Mode 2: Obstacle-to-obstacle parking space detection and limited line-to-line parking space detection are enabled, because operative vision sensors fall below a second set of vision sensors, a smaller subset of the first set. The second set could depend on the longitudinal direction of the parking space detection. For example: forward = VSS_F; rear=VSS_R. In Mode 2 the smaller subset of ultrasonic sensors for the given direction can be accepted, compared to the number of operative ultrasonic sensors required for automated parking. Therefore, this mode of parking space detection can be available even if automated parking is not available.
- Mode 3: Obstacle-to-obstacle parking space detection and limited line-to-line parking space detection are enabled, because operative vision sensors fall below a third set of vision sensors, a smaller subset of the first set and different from the second set. The third set could depend on the lateral direction of the parking space detection. For example: left = VSS_LS; right=VSS_RS. In Mode 3 the smaller subset of ultrasonic sensors for the given direction can be accepted, compared to the number of operative ultrasonic sensors required for automated parking. Therefore, this mode of parking space detection can be available even if automated parking is not available.
- Mode 4: Obstacle-to-obstacle parking space detection is enabled but line-to-line parking space detection is not enabled, because operative vision sensors fall to zero or below a fourth set. In Mode 4 the smaller subset of ultrasonic sensors for the given direction cannot be accepted. The full set of ultrasonic sensors for the given direction should be operative. This mode can coexist with Mode 3 of automated parking (FIG. 6).

The above-mentioned sensor failure transition conditions of the state machine of FIG. 5 may be accompanied by sensor recovery transition conditions to recover from state 520 to 500 or 510, and from state 510 to 500. A sensor recovery transition occurs when there are enough recovered sensors to ensure that all required minimum viable sensor sets of the state 500 or 510 are now operable.

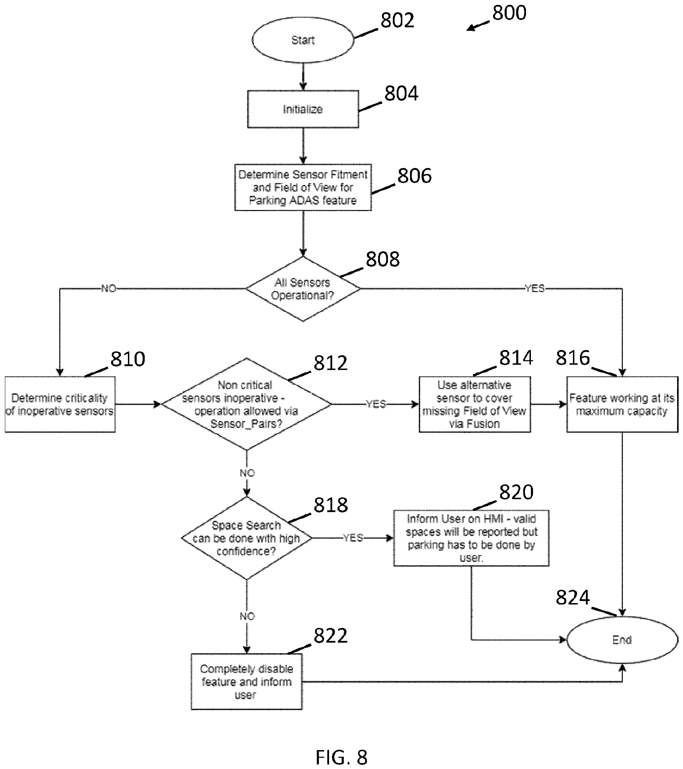

FIG. 8 is a flowchart 800 equivalent to the state machine.
- Operation 802 is a start block.
- Operation 804 is an optional initialization block.
- Operation 806 comprises determining fitment and fields of view of the sensors for the ADAS parking assistance function. This may be factory-determined.
- Decision block 808 comprises determining whether all sensors are operative. Examples are provided earlier.
- If all sensors are operative, the flowchart progresses to operation 816 in which the ADAS is working at full capacity (e.g. state 500), then the process ends at operation 824.
- If not all sensors are operative, the flowchart progresses to operation 810 which determines the criticality of the inoperative sensor(s). FIGS. 6 and 7 provide example lookup tables for determining criticality.
- After operation 810, decision block 812 determines whether operation is allowed via sensor pairings (sensor fusion of remaining operative sensors), with reference to whether the inoperative sensors are critical. FIGS. 6 and 7 provide example lookup tables for determining acceptable sensor pairings.
- If sensor pairings is allowed, operation 814 uses the alternative sensors to cover the missing field of view via sensor fusion. This operation links to operation 816 in which the ADAS is working at full capacity, allowing automated parking.
- If sensor pairings is not allowed, automated parking will be prohibited. Then, operation 818 determines whether parking space searching can be performed with high confidence. FIG. 7 provides an example lookup table for this operation 818.
- If parking space searching can be performed with high confidence, operation 820 informs the user via an HMI 322 that valid spaces will be reported but parking has to be manual. This corresponds to state 510. The process then ends at operation 824.
- If parking space searching cannot be performed with high confidence, operation 822 disables the ADAS and informs the user. This corresponds to state 520. The process then ends at operation 824.

For purposes of this invention, it is to be understood that the controller(s) described herein can each comprise a control unit or computational device having one or more electronic processors. A vehicle 100 and/or a system thereof may comprise a single control unit or electronic controller or alternatively different functions of the controller(s) may be embodied in, or hosted in, different control units or controllers. A set of instructions could be provided which, when executed, cause said controller(s) or control unit(s) to implement the control techniques described herein (including the described method(s)). The set of instructions may be embedded in one or more electronic processors, or alternatively, the set of instructions could be provided as software to be executed by one or more electronic processor(s). For example, a first controller may be implemented in software run on one or more electronic processors, and one or more other controllers may also be implemented in software run on one or more electronic processors, optionally the same one or more processors as the first controller. It will be appreciated, however, that other arrangements are also useful, and therefore, the present invention is not intended to be limited to any particular arrangement. In any event, the set of instructions described above may be embedded in a computer-readable storage medium (e.g., a non-transitory computer-readable storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM and EEPROM); flash memory; or electrical or other types of medium for storing such information/instructions.

It will be appreciated that various changes and modifications can be made to the present invention without departing from the scope of the present invention as defined by the claims.

The blocks illustrated in FIGS. 4-5 may represent steps in a method and/or sections of code in the computer program 308. The illustration of a particular order to the blocks does not necessarily imply that there is a required or preferred order for the blocks and the order and arrangement of the block may be varied. Furthermore, it may be possible for some steps to be omitted.

Although embodiments of the present invention have been described in the preceding paragraphs with reference to various examples, it should be appreciated that modifications to the examples given can be made without departing from the scope of the invention as claimed. Some strategies described herein could be relevant to ADAS functions other than park assist functions, particularly low-speed functions. Further, the above examples refer primarily to the combination of ultrasonic sensors and vision sensors. In other embodiments, the different sensing modalities could comprise any different ones of: ultrasonic sensors; radar sensors; lidar sensors; or visual light spectrum cameras. Features described in the preceding description may be used in combinations other than the combinations explicitly described.

Although functions have been described with reference to certain features, those functions may be performable by other features whether described or not. Although features have been described with reference to certain embodiments, those features may also be present in other embodiments whether described or not.

## Claims

1. A control system (300) for a vehicle, the control system comprising one or more controllers (301), wherein the control system is configured to:
enable (402) a driver assistance system in dependence on information from a plurality of sensors (310, 312);
determine (404) that one or more of the plurality of sensors is inoperative while another one or more of the plurality of sensors is operative; and
restrict (406) functionality of the enabled driver assistance system in dependence on the inoperative one or more sensors,
wherein the driver assistance system is configured to provide one or more parking assistance functions, the one or more parking assistance functions comprising automated parking and parking space detection, and wherein restricting the functionality comprises restricting automated parking without restricting parking space detection, in dependence on the inoperative one or more of the sensors, such that, when automated parking is not available, the parking space detection function is operable to render an alert (820) via a human machine interface (HMI) (322) when a detected parking space meets parking suitability conditions and to alert a driver that parking in said detected space has to be performed manually.

2. The control system of claim 1, wherein restricting the functionality comprises restricting automated manoeuvring to a subset of one or more directions in dependence on the inoperative one or more of the sensors.

3. The control system of claim 2, wherein restricting the functionality comprises transmitting a prompt for output to a driver, prompting the driver to control manoeuvring when manoeuvring in another direction is required, not from the subset of one or more directions.

4. The control system of any preceding claim, wherein the control system is configured to restrict functionality of the driver assistance system in dependence on at least one of:
in which longitudinal direction a sensing axis of the inoperative one or more of the sensors extends;
in which lateral direction a sensing axis of the inoperative one or more of the sensors is positionally and/or angularly offset; and
a sensor modality of the inoperative one or more of the sensors.

5. The control system of any preceding claim, wherein the plurality of sensors comprise sensors providing a first sensor modality and sensors providing a second sensor modality, and wherein the vehicle is configured to be manoeuvred in a first longitudinal direction and in a second longitudinal direction and is configured to be steered in a first lateral direction and in a second lateral direction.;

6. The control system of claim 5, wherein the first sensor modality is an ultrasonic sensor modality, and wherein the second sensor modality is a vision sensor modality.

7. The control system of claim 5 or claim 6, wherein when the inoperative one or more of the sensors includes at least one sensor providing the first sensor modality with a sensor axis extending in the first longitudinal direction, restricting the functionality comprises at least partially inhibiting automated manoeuvring in the first longitudinal direction without inhibiting automated manoeuvring in the second longitudinal direction.

8. The control system of claim 7, wherein, if the sensor axis is angularly and/or positionally offset in the first lateral direction, at least partially inhibiting automated manoeuvring in the first longitudinal direction comprises inhibiting automated manoeuvring in the first longitudinal direction with steering in the first lateral direction without inhibiting automated manoeuvring in the first longitudinal direction with steering in the second lateral direction.

9. The control system of any one of claims 5 to 8, wherein, when the one or more inoperative sensors includes at least one sensor providing the second sensor modality but does not include at least one sensor providing the first sensor modality, automated manoeuvring in the first longitudinal direction is not inhibited.

10. The control system of any one of claims 5 to 9, wherein when the inoperative one or more of the sensors includes a subset of at least one sensor providing the first sensor modality and having a sensor axis extending in the first longitudinal direction, restricting the functionality comprises at least partially inhibiting automated manoeuvring of the vehicle in the first longitudinal direction without inhibiting detection of parking spaces offset from the vehicle in the first longitudinal direction.

11. The control system of claim 10, wherein if the sensor axis is angularly and/or positionally offset in the first lateral direction, restricting the functionality comprises inhibiting automated manoeuvring of the vehicle in the first longitudinal direction with steering in the first lateral direction without inhibiting automated manoeuvring in the first longitudinal direction with steering in the second lateral direction and without inhibiting detection of parking spaces offset from the vehicle in the first longitudinal direction;

12. The control system of any preceding claim, wherein the driver assistance system is configured to fuse the information from the plurality of sensors, comprising fusing information from different sensor modalities.

13. A vehicle (100) comprising the control system of any preceding claim.

14. A method of controlling a driver assistance system, the driver assistance system being configured to provide one or more parking assistance functions, the one or more parking assistance functions comprising automated parking and parking space detection, the method comprising:
enabling (402) the driver assistance system in dependence on information from a plurality of sensors;
determining (404) that one or more of the plurality of sensors is inoperative while another one or more of the plurality of sensors is operative;
restricting (406) functionality of the enabled driver assistance system in dependence on the inoperative one or more sensors, wherein restricting the functionality comprises restricting automated parking without restricting parking space detection, in dependence on the inoperative one or more of the sensors; and
when automated parking is not available, rendering an alert (820) via a human machine interface (HMI) when a detected parking space meets parking suitability conditions and alerting a driver that parking in said detected space has to be performed manually.

15. Computer software that, when executed, is arranged to perform a method according to claim 14.

## Patentansprüche

1. Steuersystem (300) für ein Fahrzeug, das Steuersystem umfassend eine oder mehrere Steuervorrichtungen (301), wobei das Steuersystem konfiguriert ist zum:
Aktivieren (402) eines Fahrerassistenzsystems in Abhängigkeit von Informationen von einer Vielzahl von Sensoren (310, 312);
Bestimmen (404), dass einer oder mehrere der Vielzahl von Sensoren nicht funktionsfähig sind, während ein anderer einer oder mehrere der Vielzahl von Sensoren funktionsfähig sind; und
Einschränken (406) einer Funktionalität des aktivierten Fahrerassistenzsystems in Abhängigkeit von dem einen oder den mehreren nicht funktionsfähigen Sensoren,
wobei das Fahrerassistenzsystem konfiguriert ist, um eine oder mehrere Parkassistenzfunktionen bereitzustellen, die eine oder die mehreren Parkassistenzfunktionen umfassend automatisiertes Parken und Parkplatzerkennung, und wobei das Einschränken der Funktionalität das Einschränken von automatisiertem Parken ohne Einschränken der Parkplatzerkennung in Abhängigkeit von dem einen oder den mehreren nicht funktionsfähigen der Sensoren derart umfasst, dass wenn automatisiertes Parken nicht verfügbar ist, die Parkplatzerkennungsfunktion betriebsfähig ist, um einen Hinweis (820) über eine Mensch-Maschine-Schnittstelle (HMI) (322) auszugeben, wenn ein erkannter Parkplatz Parkeignungsbedingungen erfüllt, und einen Fahrer darauf hinzuweisen, dass ein Parken in dem erkannten Platz manuell durchgeführt werden muss.

2. Steuersystem nach Anspruch 1, wobei das Einschränken der Funktionalität das Einschränken eines automatisierten Manövrierens auf eine Teilmenge einer oder mehrerer Richtungen in Abhängigkeit von dem einen oder den mehreren nicht funktionsfähigen der Sensoren umfasst.

3. Steuersystem nach Anspruch 2, wobei das Einschränken der Funktionalität ein Übertragen eines Prompts für Ausgabe an einen Fahrer umfasst, der den Fahrer auffordert, das Manövrieren zu steuern, wenn das Manövrieren in eine andere Richtung erforderlich ist, die nicht von der Teilmenge einer oder mehrerer Richtungen stammt.

4. Steuersystem nach einem der vorstehenden Ansprüche, wobei das Steuersystem konfiguriert ist, um die Funktionalität des Fahrerassistenzsystems in Abhängigkeit von mindestens einem einzuschränken von:
in welche Längsrichtung sich eine Sensorachse des einen oder der mehreren nicht funktionsfähigen der Sensoren erstreckt;
in welche seitliche Richtung eine Sensorachse des einen oder der mehreren nicht funktionsfähigen der Sensoren positionell und/oder winklig versetzt ist; und
einer Sensormodalität des einen oder der mehreren nicht funktionsfähigen der Sensoren.

5. Steuersystem nach einem der vorstehenden Ansprüche, wobei die Vielzahl von Sensoren Sensoren, die eine erste Sensormodalität bereitstellen, und Sensoren umfassen, die eine zweite Sensormodalität bereitstellen, und wobei das Fahrzeug konfiguriert ist, um in eine erste Längsrichtung und in eine zweite Längsrichtung manövriert zu werden, und konfiguriert ist, um in eine erste seitliche Richtung und in eine zweite seitliche Richtung gelenkt zu werden.;

6. Steuersystem nach Anspruch 5, wobei die erste Sensormodalität eine Ultraschallsensormodalität ist, und wobei die zweite Sensormodalität eine Sichtsensormodalität ist.

7. Steuersystem nach Anspruch 5 oder 6, wobei, wenn der eine oder die mehreren der nicht funktionsfähigen der Sensoren mindestens einen Sensor einschließen, der die erste Sensormodalität mit einer Sensorachse versieht, die sich in die erste Längsrichtung erstreckt, das Einschränken der Funktionalität ein mindestens teilweises Hemmen des automatisierten Manövrierens in die erste Längsrichtung umfasst, ohne das automatisierte Manövrieren in die zweite Längsrichtung zu hemmen.

8. Steuersystem nach Anspruch 7, wobei, falls die Sensorachse in die erste seitliche Richtung winklig und/oder positionell versetzt ist, das mindestens teilweise Hemmen des automatisierten Manövrierens in die erste Längsrichtung das Hemmen des automatisierten Manövrierens in die erste Längsrichtung mit Lenken in die erste seitliche Richtung umfasst, ohne das automatisierte Manövrieren in die erste Längsrichtung mit Lenken in die zweite seitliche Richtung zu hemmen.

9. Steuersystem nach einem der Ansprüche 5 bis 8, wobei, wenn der eine oder die mehreren nicht funktionsfähigen Sensoren mindestens einen Sensor einschließen, der die zweite Sensormodalität bereitstellt, aber nicht mindestens einen Sensor einschließen, der die erste Sensormodalität bereitstellt, das automatisierte Manövrieren in die erste Längsrichtung nicht gehemmt wird.

10. Steuersystem nach einem der Ansprüche 5 bis 9, wobei, wenn der eine oder die mehreren nicht funktionsfähigen der Sensoren eine Teilmenge mindestens eines Sensors einschließen, der die erste Sensormodalität bereitstellt und eine Sensorachse aufweist, die sich in die erste Längsrichtung erstreckt, das Einschränken der Funktionalität das mindestens teilweise Hemmen des automatisierten Manövrierens des Fahrzeugs in die erste Längsrichtung umfasst, ohne die Erkennung von Parkplätzen zu hemmen, die von dem Fahrzeug in die erste Längsrichtung versetzt sind.

11. Steuersystem nach Anspruch 10, wobei, falls die Sensorachse in die erste seitliche Richtung winklig und/oder positionell versetzt ist, das Einschränken der Funktionalität das Hemmen des automatisierten Manövrierens des Fahrzeugs in die erste Längsrichtung mit Lenken in die erste seitliche Richtung umfasst, ohne das automatisierte Manövrieren in die erste Längsrichtung mit Lenken in die zweite seitliche Richtung zu hemmen und ohne die Erkennung von Parkplätzen zu hemmen, die von dem Fahrzeug in die erste Längsrichtung versetzt sind;

12. Steuersystem nach einem der vorstehenden Ansprüche, wobei das Fahrerassistenzsystem konfiguriert ist, um die Informationen von der Vielzahl von Sensoren zu fusionieren, umfassend ein Fusionieren von Informationen von unterschiedlichen Sensormodalitäten.

13. Fahrzeug (100), umfassend das Steuersystem nach einem der vorstehenden Ansprüche.

14. Verfahren zum Steuern eines Fahrerassistenzsystems, wobei das Fahrerassistenzsystem konfiguriert ist, um eine oder mehrere Parkassistenzfunktionen bereitzustellen, die eine oder die mehreren Parkassistenzfunktionen umfassend automatisiertes Parken und Parkplatzerkennung, das Verfahren umfassend:
Aktivieren (402) des Fahrerassistenzsystems in Abhängigkeit von Informationen von einer Vielzahl von Sensoren;
Bestimmen (404), dass einer oder mehrere der Vielzahl von Sensoren nicht funktionsfähig sind, während ein anderer einer oder mehrere der Vielzahl von Sensoren funktionsfähig sind;
Einschränken (406) einer Funktionalität des aktivierten Fahrerassistenzsystems in Abhängigkeit von dem einen oder den mehreren nicht funktionsfähigen Sensoren, wobei das Einschränken der Funktionalität das Einschränken des automatisierten Parkens umfasst, ohne die Parkplatzerkennung in Abhängigkeit von dem einen oder den mehreren nicht funktionsfähigen der Sensoren einzuschränken; und
wenn automatisiertes Parken nicht verfügbar ist, Ausgeben eines Hinweises (820) über eine Mensch-Maschine-Schnittstelle (HMI), wenn ein erkannter Parkplatz Parkeignungsbedingungen erfüllt, und Hinweisen eines Fahrers darauf, dass das Parken in dem erkannten Platz manuell durchgeführt werden muss.

15. Computersoftware, die, wenn sie ausgeführt wird, angeordnet ist, um ein Verfahren nach Anspruch 14 durchzuführen.

## Revendications

1. Système de commande (300) pour un véhicule, le système de commande comprenant un ou plusieurs dispositifs de commande (301), dans lequel le système de commande est configuré pour :
activer (402) un système d'aide à la conduite en fonction des informations provenant d'une pluralité de capteurs (310, 312) ;
déterminer (404) qu'un ou plusieurs capteurs de la pluralité de capteurs sont non opérationnels alors qu'un autre ou plusieurs capteurs de la pluralité de capteurs sont opérationnels ; et
restreindre (406) la fonctionnalité du système d'aide à la conduite activé en fonction d'un ou de plusieurs capteurs non opérationnels,
dans lequel le système d'aide à la conduite est configuré pour fournir une ou plusieurs fonctions d'aide au stationnement, la ou les fonctions d'aide au stationnement comprenant le stationnement automatisé et la détection d'espace de stationnement, et dans lequel la restriction de la fonctionnalité comprend la restriction du stationnement automatisé sans restreindre la détection d'espace de stationnement, en fonction d'un ou plusieurs capteurs non opérationnels, de sorte que, lorsque le stationnement automatisé n'est pas disponible, la fonction de détection d'espace de stationnement est en mesure de donner une alerte (820) par l'intermédiaire d'une interface homme-machine (IHM) (322) lorsqu'un espace de stationnement détecté répond aux conditions d'aptitude au stationnement et d'avertir le conducteur que le stationnement dans ledit espace détecté doit être effectué manuellement.

2. Système de commande selon la revendication 1, dans lequel la limitation de la fonctionnalité comprend la limitation de la manoeuvre automatisée à un sous-ensemble d'une ou plusieurs directions en fonction de la non opération d'un ou plusieurs capteurs.

3. Système de commande selon la revendication 2, dans lequel la restriction de la fonctionnalité comprend la transmission d'une invite de sortie à un conducteur, invitant le conducteur à commander la manoeuvre lorsqu'une manoeuvre dans une autre direction est nécessaire, en dehors du sous-ensemble d'une ou de plusieurs directions.

4. Système de commande selon l'une quelconque revendication précédente, dans lequel le système de commande est configuré pour restreindre la fonctionnalité du système d'aide à la conduite en fonction d'au moins l'un des éléments suivants :
dans laquelle direction longitudinale s'étend l'axe de détection de l'un ou de plusieurs des capteurs hors service ;
dans laquelle direction latérale, l'axe de détection de l'un ou de plusieurs des capteurs hors service est décalé en position et/ou angulairement ; et
une modalité du capteur de l'un ou de plusieurs des capteurs non opérationnels.

5. Système de commande selon l'une quelconque revendication précédente, dans lequel la pluralité de capteurs comprend des capteurs fournissant une première modalité de capteur et des capteurs fournissant une seconde modalité de capteur, et dans lequel le véhicule est configuré pour être manoeuvré dans une première direction longitudinale et dans une seconde direction longitudinale et est configuré pour être dirigé dans une première direction latérale et dans une seconde direction latérale ;

6. Système de commande selon la revendication 5, dans lequel la première modalité de capteur est une modalité de capteur à ultrasons, et dans lequel la seconde modalité de capteur est une modalité de capteur de vision.

7. Système de commande selon la revendication 5 ou la revendication 6, dans lequel, lorsque l'un ou plusieurs des capteurs non opérationnels comportent au moins un capteur fournissant la première modalité de capteur avec un axe de capteur s'étendant dans la première direction longitudinale, la restriction de la fonctionnalité comprend l'inhibition au moins partielle de la manoeuvre automatisée dans la première direction longitudinale sans inhiber la manoeuvre automatisée dans la seconde direction longitudinale.

8. Système de commande selon la revendication 7, dans lequel, si l'axe du capteur est décalé angulairement et/ou en position dans la première direction latérale, l'inhibition au moins partielle de la manoeuvre automatisée dans la première direction longitudinale comprend l'inhibition de la manoeuvre automatisée dans la première direction longitudinale avec direction dans la première direction latérale, sans inhibition de la manoeuvre automatisée dans la première direction longitudinale avec direction dans la seconde direction latérale.

9. Système de commande selon l'une quelconque des revendications 5 à 8, dans lequel, lorsque le ou les capteurs non opérationnels comportent au moins un capteur fournissant la seconde modalité de capteur mais ne comportent pas au moins un capteur fournissant la première modalité de capteur, la manoeuvre automatisée dans la première direction longitudinale n'est pas inhibée.

10. Système de commande selon l'une quelconque des revendications 5 à 9, dans lequel, lorsque le ou les capteurs non opérationnels comportent un sous-ensemble d'au moins un capteur fournissant la première modalité de capteur et ayant un axe de capteur s'étendant dans la première direction longitudinale, la restriction de la fonctionnalité comprend l'inhibition au moins partielle de la manoeuvre automatisée du véhicule dans la première direction longitudinale sans inhiber la détection des places de stationnement décalées par rapport au véhicule dans la première direction longitudinale.

11. Système de commande selon la revendication 10, dans lequel si l'axe du capteur est décalé angulairement et/ou positionnellement dans la première direction latérale, la restriction de la fonctionnalité comprend l'inhibition de la manoeuvre automatisée du véhicule dans la première direction longitudinale avec direction dans la première direction latérale sans inhiber la manoeuvre automatisée dans la première direction longitudinale avec direction dans la seconde direction latérale et sans inhiber la détection des places de stationnement décalées par rapport au véhicule dans la première direction longitudinale ;

12. Système de commande selon l'une quelconque revendication précédente, dans lequel le système d'aide à la conduite est configuré pour fusionner les informations provenant de la pluralité de capteurs, en fusionnant les informations provenant de différentes modalités de capteurs.

13. Véhicule (100) comprenant le système de commande selon l'une quelconque revendication.

14. Procédé de commande d'un système d'aide à la conduite, le système d'aide à la conduite étant configuré pour fournir une ou plusieurs fonctions d'aide au stationnement, la ou les fonctions d'aide au stationnement comprenant le stationnement automatisé et la détection d'espace de stationnement, le procédé comprenant :
l'activation (402) du système d'aide à la conduite en fonction des informations provenant d'une pluralité de capteurs ;
la détermination (404) qu'un ou plusieurs capteurs de la pluralité de capteurs sont non opérationnels alors qu'un autre ou plusieurs capteurs de la pluralité de capteurs sont opérationnels ;
la restriction (406) de la fonctionnalité du système d'aide à la conduite activé en fonction d'un ou de plusieurs capteurs non opérationnels, dans lequel la restriction de la fonctionnalité comprend la restriction du stationnement automatisé sans restreindre la détection de l'espace de stationnement, en fonction d'un ou de plusieurs capteurs non opérationnels ; et
lorsque le stationnement automatisé n'est pas disponible, l'émission d'une alerte (820) par l'intermédiaire d'une interface homme-machine (IHM) lorsqu'une place de stationnement détectée remplit les conditions d'aptitude au stationnement et l'avertissement du conducteur que le stationnement dans ladite place détectée doit être effectué manuellement.

15. Logiciel informatique qui, lorsqu'il est exécuté, est agencé pour effectuer un procédé selon la revendication 14.
